# FASCICULE DE BREVET EUROPEEN

(11) **EP 1 038 101 B1**
(45) Date de publication et mention de la délivrance du brevet: **06.03.2002**
(21) Numéro de dépôt: 98958990.8
(22) Date de dépôt: 09.12.1998
(51) Int. Cl.: F02M 61/18, F02M 61/16

(54) **INJECTEUR D'ESSENCE A REVETEMENT CERAMIQUE ANTI-CALAMINE, POUR INJECTION DIRECTE**
BENZINEINSPRITZVENTIL MIT KERAMISCHER BESCHICHTUNG FÜR DIREKTEINSPRITZUNG
FUEL INJECTOR WITH ANTI-SCALE CERAMIC COATING FOR DIRECT INJECTION

(30) Priorité: 12.12.1997 FR 9715762
(43) Date de publication de la demande: 27.09.2000
(73) Titulaire: MAGNETI MARELLI FRANCE, 92000 Nanterre (FR)
(72) Inventeur: PONTOPPIDAN, Michael, F-92500 Rueil Malmaison (FR)
(74) Mandataire: Bérogin, Francis
(86) Numéro de dépôt international: FR9802668
(87) Numéro de publication internationale: WO9931382

(56) Documents cités:
- EP-A- 0 151 793
- EP-A- 0 790 404
- DE-A- 1 526 709
- ROODE VAN M ET AL: "CERAMIC COATINGS FOR CORROSION ENVIRONMENTS" CERAMIC ENGINEERING AND SCIENCE PROCEEDINGS, vol. 9, no. 9/10, septembre 1988, pages 1245-1259, XP000036419 cité dans la demande
- PATENT ABSTRACTS OF JAPAN vol. 097, no. 008, 29 août 1997 & JP 09 112392 A (DENSO CORP), 28 avril 1997

## Description

L'invention concerne les injecteurs d'essence, pour moteurs à combustion interne à allumage commandé et injection directe d'essence dans les chambres de combustion du moteur.

L'invention se rapporte à un injecteur d'essence du type dans lequel l'injecteur comprend un nez percé d'au moins un orifice de sortie d'essence vers une chambre de combustion du moteur, lorsque l'orifice de sortie est alimenté en essence, en position d'ouverture de l'injecteur, dans laquelle un obturateur mobile est écarté d'un siège par des moyens d'actionnement, à l'encontre de moyens de rappel, en général élastiques, rappelant l'obturateur vers son siège, et le maintenant contre ce dernier en position de fermeture de l'injecteur.

Pour équiper plus particulièrement les moteurs diesel, on connait de nombreuses réalisations d'injecteurs de carburant de ce type, à fonctionnement par intermittences, dans lesquelles l'obturateur appartient à un équipage mobile, parfois appelé plongeur, qui, dans un injecteur de type électromagnétique, est déplacé entre les positions de fermeture et d'ouverture par l'alimentation électrique d'une bobine de solénoïde, disposée dans le corps de l'injecteur et écartant l'équipage mobile du siège de l'obturateur à l'encontre d'au moins un ressort de rappel fermant l'injecteur par l'application de l'obturateur contre son siège, à la fin de l'alimentation électrique.

Lorsqu'un injecteur de carburant du type précité est utilisé dans une installation d'injection directe de carburant dans les chambres de combustion d'un moteur, on sait que le nez au moins de l'injecteur débouche directement dans une chambre de combustion. Du fait de cette implantation, l'injecteur est soumis à des contraintes importantes, notamment des contraintes thermiques élevées, pendant les phases de combustion des cycles moteur.

Pour protéger un injecteur de gazole pour moteur diesel contre l'oxydation et la corrosion en fonctionnement, et en particulier contre l'oxydation et la corrosion cycliques jusqu'à des températures pouvant être de l'ordre de 1000°C, il a déjà été proposé de revêtir certaines surfaces des injecteurs d'un revêtement de céramique, en particulier en phase vitreuse, ou de réaliser certaines pièces de l'injecteur en des matériaux résistant à l'usure, ou encore d'associer à l'injecteur des pièces complémentaires réalisées dans ces matériaux, par exemple en céramique ou en acier.

En particulier, dans l'article "Comparative evaluation of high temperature coatings for corrosion protection of fuel injector tips" de MARK VAN ROODE et LULU HSU, dans "Surface and Coatings Technology", 32 (1987) pages 153 à 167, il est proposé de déposer un revêtement à hautes performances sur des nez d'injecteurs en alliage de nickel et de chrome, par un dépôt physique en phase vapeur par faisceau d'électrons notamment de céramique en phase vitreuse, comme protection additionnelle contre les dégradations par oxydation et corrosion.

Egalement pour protéger des injecteurs analogues contre la corrosion, US-A-4,266,729 propose de réaliser l'embout de l'équipage mobile formant obturateur et le disque ou la pastille percé(e) de l'orifice de sortie, qui est simultanément l'orifice de calibrage, dans la configuratin d'injecteur considérée, en un matériau résistant à la corrosion, tel que l'acier, une céramique ou un verre industriel, pour empêcher le resserrement de l'orifice de sortie par corrosion. US-A-4,991,771 propose l'utilisation d'une paire de bagues en céramique disposées chacune sur l'un des deux côtés d'un orifice de sortie d'injecteur pour réduire la corrosion ou l'érosion. US-A-4,592,506 propose un injecteur avec un noyau déflecteur en forme de cône et une bague de buse d'injection réalisés en un matériau céramique résistant à l'usure, et EP-A-677 656 décrit un équipage mobile ou plongeur d'injecteur dont le corps de plongeur et l'embout du plongeur, constituant l'obturateur, sont réalisés en un matériau résistant à l'usure, tel qu'une céramique ou des métaux appropriés, notamment en acier, pour résister à l'usure, à la déformation et à la fatigue subies par ces composants de l'injecteur en service.

JP-A-09 112 392 décrit un injecteur selon la première partie de la revendication 1.

Les réalisations présentées ci-dessus, avec des pièces totalement en céramique, soit pour remplacer des pièces métalliques de réalisations antérieures plus conventionnelles, soit pour coopérer avec des injecteurs de structure conventionnelle, ont pour inconvénient d'être coûteuses, d'une part, et, d'autre part, insatisfaisantes sur le plan de la stabilité de dosage (alignement des sections débitantes au niveau des nez d'injecteurs). En effet, des pastilles en céramique percées d'orifices de même diamètre que les orifices de sortie et, éventuellement, de calibrage des nez d'injecteurs, sont impossibles à positionner de manière parfaitement coaxiale à l'orifice de sortie.

En outre, ces réalisations visent à protéger les injecteurs contre la corrosion et l'oxydation.

Mais ces réalisations ne sont pas appropriées à la protection des injecteurs d'essence pour injection directe contre le dépôt de calamine qui, dans des conditions particulières d'emplacement de l'injecteur et de l'état de surface de son nez débouchant dans la chambre de combustion, et après un temps très court de fonctionnement du moteur (environ 20 heures) peut conduire à une dégradation importante des performances de l'injecteur.

En effet, à la fermeture d'un injecteur pour injection directe, la vitesse de sortie du carburant est faible, favorisant ainsi un dépôt de carburant liquide par capillarité sur la surface du nez de l'injecteur. En outre, cette surface étant métallique, elle présente un potentiel électrochimique élevé, et, en fonction du procédé de fabrication, une microstructure de rugosité non négligeable. Or les carburants modernes, notamment l'essence, ont une composition chimique complexe, et contiennent de nombreux composés aromatiques. Lorsque le dépôt de carburant liquide sur la surface du nez d'injecteur est fortement et brutalement chauffé, ou par la phase de combustion suivante, ou durant un arrêt du moteur en condition chaude, par convexion thermique interne, il se produit une décomposition par craquage de ce carburant liquide, ce qui peut provoquer, après un faible temps de fonctionnement du moteur, un dépôt de calamine sur la surface du nez de l'injecteur, dont les performances sont ainsi diminuées car, au lieu d'émettre un jet régulier de carburant dans la chambre de combustion, le jet est altéré et son orientation peut être fortement modifiée, et le débit d'alimentation peut être diminué, ce qui entraîne une perturbation de la préparation de la charge dans la chambre de combustion, pouvant entraîner à son tour, une dégradation grave et inacceptable de la combustion [râté de combustion ou combustion partielle, tous deux provoquant une émission en gaz nocifs inacceptable].

Le problème à la base de l'invention est de proposer un injecteur d'essence pour injection directe convenant mieux que ceux de l'état de la technique aux diverses exigences de la pratique, en particulier en ce qu'il est protégé contre la contamination par le dépôt de calamine, c'est-à-dire de résidus hydrocarbonés, et cela même lorsque l'injecteur se trouve à proximité d'une bougie d'allumage dans une chambre de combustion.

En particulier, le but de l'invention est de proposer un injecteur d'essence protégé contre les modifications des caractéristiques de débit d'essence et de géométrie des jets d'essence pulvérisés, qui peuvent résulter des dépôts, sur le nez de l'injecteur, de résidus hydrocarburés, sachant que, par rapport à un injecteur propre (sans dépôt de calamine), un injecteur avec dépôt de calamine sur la surface de son nez peut délivrer un jet d'essence dévié et déformé dans la chambre de combustion, alimentée avec un débit qui peut être réduit de 25 à 35 %, selon la durée d'injection, c'est-à-dire selon la largeur de l'impulsion électrique de commande d'un injecteur électromagnétique.

A cet effet, l'injecteur d'essence de l'invention, du type présenté ci-dessus, se caractérise en ce que la face externe du nez présente, immédiatement en aval et autour dudit orifice de sortie, par rapport au sens de passage de l'essence, au moins un décrochement délimitant un évidement dans la face externe du nez, et en ce qu'un revêtement de céramique est déposé au moins dans ledit évidement.

On obtient ainsi, autour de chaque orifice de sortie et en aval de cet orifice, une surface bien plus lisse et bien moins thermiquement conductrice ainsi qu'électrochimiquement moins active que la surface externe du nez métallique d'un injecteur, qui est précisément remplacée par la face externe du revêtement de céramique de l'injecteur selon l'invention.

Avantageusement en outre, le revêtement de céramique remplit au moins ledit évidement, de sorte à assurer sensiblement une continuité de surface entre la paroi dudit orifice de sortie et la face externe du revêtement de céramique, et, de préférence également, entre la face externe du revêtement de céramique et la face externe du nez en aval dudit orifice de sortie. Cette continuité de surface a pour avantage de n'entraîner aucune perturbation d'écoulement vers la chambre de combustion correspondante.

L'injecteur peut être du type comportant un téton de déviation, fixé à l'obturateur et axialement engagé dans l'orifice de sortie, sans contact avec la paroi dudit orifice, et en saillie vers l'aval dudit orifice, auquel cas il est avantageux que le revêtement de céramique entoure sans contact au moins une partie dudit téton de déviation. Dans ce mode de réalisation, il est également possible que ce téton de déviation soit au moins partiellement recouvert d'un revêtement de céramique, en particulier sur sa ou ses faces tournée(s) vers l'intérieur de la chambre de combustion.

L'injecteur peut également être du type selon lequel la face externe de son nez présente une nervure périphérique, en saillie vers l'aval et entourant à distance ledit orifice de sortie, auquel cas le revêtement de céramique s'étend avantageusement dudit orifice de sortie au moins jusqu'au pied de ladite nervure.

De préférence, la céramique du revêtement est une céramique vitreuse, et ce revêtement est constitué d'un dépôt par projection ou électrolytique de céramique sur le nez métallique de l'injecteur, et éventuellement sur le téton de déviation.

L'invention sera mieux comprise, et d'autres caractéristiques et avantages de l'invention ressortiront de la description donnée ci-dessous, à titre non limitatif, d'exemples de réalisation décrits en référence aux dessins annexés sur lesquels :
- la figure 1 est une vue schématique en élévation latérale d'un injecteur d'essence pour injection directe dans un moteur à allumage commandé,
- la figure 2 est une vue partielle en coupe axiale d'un exemple de l'injecteur de la figure 1,
- la figure 3 est une vue schématique analogue à la figure 2 d'un second exemple de nez d'injecteur, et
- la figure 4 est un graphique représentant deux courbes d'évolution du débit moyen (en mg par injection) en fonction de la durée d'injection Tinj (en ms) pour un injecteur sans calamine sur la courbe du haut et un injecteur contaminé avec dépôt de calamine sur la courbe du bas, après vingt heures de fonctionnement du moteur.

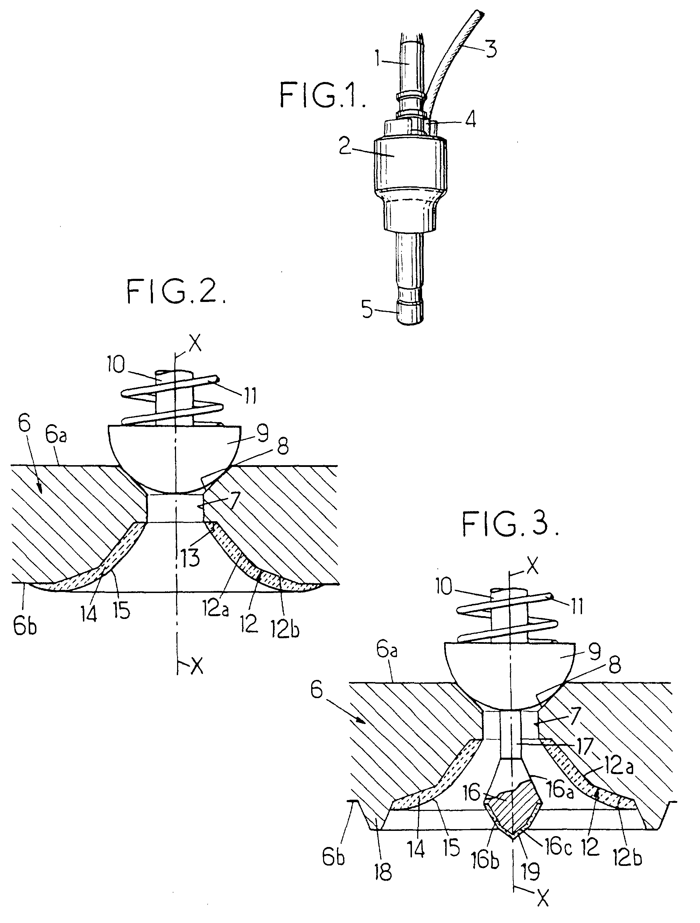

La figure 1 représente schématiquement un injecteur d'essence pour injection directe d'essence dans une chambre de combustion d'un moteur à allumage commandé. L'injecteur est du type électromagnétique à fonctionnement par intermittences, et comprend une arrivée tubulaire de carburant 1 débouchant dans un corps 2, qui est tubulaire et loge notamment une bobine de solénoïde alimentée en courant électrique par un conducteur électrique 3 relié à l'injecteur par un connecteur électrique schématisé en 4. Le corps 2 loge également un équipage mobile s'étendant jusqu'au nez 5 de l'injecteur, sensiblement dans le prolongement de l'arrivée d'essence 1 mais du côté opposé du corps 2, par rapport à cette arrivée 1.

Comme représenté schématiquement sur la figure 2, le nez d'injecteur 5 comporte une pastille d'extrémité 6 percée d'un unique orifice cylindrique 7, qui, dans cette configuration d'injecteur, est simultanément un orifice de calibrage et un orifice de sortie pour le passage d'un jet d'essence sous pression de l'intérieur du nez 5 vers la chambre de combustion correspondante. Cet orifice de sortie et calibrage 7 se raccorde à la face plane 6a de la pastille 6 qui est tournée vers l'intérieur du nez 5 par un siège tronconique 8, contre lequel est appliqué, en position de fermeture de l'injecteur, un obturateur 9, dans cet exemple en forme de calotte sphérique, solidaire de l'extrémité inférieure d'un plongeur 10 de l'équipage mobile à l'intérieur de l'injecteur, cet obturateur 9 étant repoussé vers son siège 8 par un ressort de compression 11 prenant appui dans le corps d'injecteur. Lorsque la bobine d'injecteur est alimentée, le plongeur 10 et l'obturateur 9 sont déplacés vers l'intérieur de l'injecteur, à l'encontre du ressort 11 qui est comprimé, de sorte à écarter l'obturateur 9 de son siège 8 et à permettre le passage d'essence contenue dans l'injecteur 1 par l'orifice de sortie 7. Immédiatement en aval de cet orifice 7, un décrochement 12 est usiné dans la face externe 6b de la pastille 6 et autour de l'orifice de sortie 7. Sur la figure 2, le décrochement 12 est un décrochement étagé en deux parties à pentes différentes, la partie interne ou supérieure 12a, vers l'orifice 7, se raccordant à la paroi de ce dernier par un épaulement radial 13, tandis que la partie externe ou inférieure 12b du décrochement 12 se raccorde à la face externe 6b de la pastille 6.

Comme représenté sur la moitié de gauche de la figure 2, un revêtement de céramique vitreuse 14 est déposé dans l'évidement délimité par le décrochement 12, et, dans la partie inférieure 12b de ce décrochement, le revêtement de céramique 14 vient légèrement en surépaisseur par rapport à la face externe plane 6b de la pastille 6. Dans la partie supérieure 12a du décrochement 12, le revêtement de céramique 14 remplit l'évidement ainsi formé de manière à assurer une continuité de surface entre la paroi de l'orifice de sortie 7 et la face externe 15 du revêtement de céramique 14. Cette continuité de surface ne perturbe pas l'écoulement d'essence par l'orifice 7 et en aval de ce dernier dans la chambre de combustion, alors que la présence du revêtement de céramique 14 autour de l'orifice de sortie 7 et immédiatement à proximité de cet orifice ainsi que sur la partie inférieure adjacente du nez 5 de l'injecteur a pour effet de protéger l'injecteur du dépôt de calamine ou de résidus hydrocarbonés sur la face externe du nez d'injecteur 5.

Sur l'exemple de la figure 3, les parties et éléments analogues aux parties et éléments de l'injecteur de la figure 2 sont repérés par les mêmes références numériques.

L'exemple de la figure 3 se distingue de celui de la figure 2 en ce que l'obturateur 9 est prolongé axialement (selon l'axe X-X de symétrie de l'injecteur) par un téton de déviation 16, qui est ainsi axialement disposé dans l'orifice de calibrage et de sortie 7 sans contact avec sa paroi et fait saillie axialement au-delà de la sortie de cet orifice 7. Le téton de déviation 16, fixé à l'obturateur 9, se déplace avec ce dernier dans ses mouvements de va-et-vient axiaux, à l'ouverture et à la fermeture de l'injecteur. Le téton de déviation 16 présente une face externe étagée à symétrie de révolution autour de l'axe X-X et avec des parties tronconiques à l'extrémité d'une petite tige cylindrique 17. Une partie tronconique interne 16a, divergente vers l'aval, par rapport au sens de passage de l'essence dans l'orifice de sortie 7, délimite avec la partie en regard du revêtement de céramique 14, qui remplit la partie supérieure 12a ou interne du décrochement 12, un passage annulaire tronconique divergent vers l'aval, qui procure un effet de pulvérisation en cône creux à l'essence injectée par l'orifice 7.

Une autre différence du nez d'injecteur de la figure 3 par rapport à celui de la figure 2 est que la face externe 6b de la pastille 6 présente une nervure périphérique 18, de section transversale sensiblement triangulaire et en saillie axiale vers l'aval, cette nervure 18 entourant à distance la sortie de l'orifice 7, et étant, dans cet exemple, présente sensiblement au niveau du raccordement de la partie inférieure ou externe 12b du décrochement 12 avec la face externe 6b de la pastille 6.

Dans cet exemple, le revêtement de céramique 14 s'étend depuis l'épaulement de raccordement à la sortie de l'orifice 7 jusqu'au pied de la nervure 18, en remplissant l'évidement délimité par les parties supérieure ou interne 12a et inférieure ou externe 12b du décrochement 12. Mais comme dans l'exemple de la figure 2, la surface externe 15 du revêtement de céramique 14 est en continuité avec la paroi de l'orifice de sortie 7 et jusqu'à la nervure 18.

En outre, les parties coniques ou tronconiques externes 16b et 16c de la face externe du téton de déviation 16 peuvent également être protégées par un revêtement de céramique 19 en continuité de surface avec la partie tronconique interne 16a de ce téton 16.

En variante de l'exemple de la figure 3, l'injecteur peut comporter un téton de déviation tel que 16 mais pas de nervure telle que 18.

Sur les figures 2 et 3, le ou les revêtement(s) de céramique 15 et/ou 19 est ou sont déposé(s) par projection ou par dépôt électrolytique dans une zone limitée de la surface externe du nez d'injecteur, cette zone limitée étant toujours immédiatement en aval de l'orifice de sortie et autour de cet orifice afin que le revêtement de céramique soit particulièrement efficace pour empêcher tout dépôt de calamine qui perturberait les caractéristiques de débit et de géométrie des jets d'essence injectés dans la chambre de combustion.

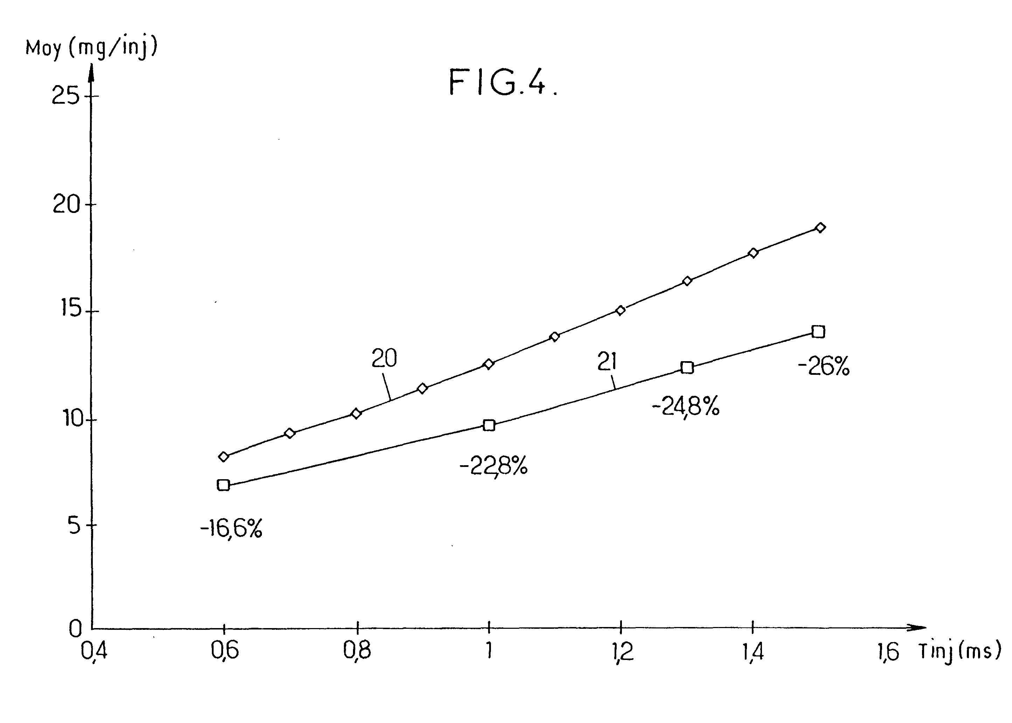

Sur la figure 4, on a indiqué le débit moyen Moy d'un injecteur, en mg d'essence injectée par injection, en fonction de la durée d'ouverture de l'injecteur ou durée d'injection Tinj, en ms, pour une injection commandée sous une pression de 8 MPa. La courbe supérieure 20, reliant des points de mesures repérés par des losanges, est la courbe obtenue pour un injecteur avec revêtement de céramique, tandis que la courbe inférieure 21, reliant des points de mesures repérés par des carrés, est la courbe obtenue avec le même injecteur sans revêtement de céramique, et donc avec dépôt de calamine, après vingt heures de fonctionnement de l'injecteur, dans chacun des cas. Pour chacun des quatre points de mesures de la courbe inférieure 21, on a indiqué la perte de performance en débit, qui varie de 16,6% à 26%.

On peut ainsi apprécier le potentiel de contribution du revêtement de céramique réalisé conformément à l'invention sur la préservation, dans le temps, des caractéristiques initiales d'un injecteur d'essence pour injection directe.

Bien entendu, l'invention s'applique aussi aux injecteurs d'essence dont le ou les orifices de sortie d'essence est ou sont en aval du ou des orifices de calibration, par rapport au sens d'écoulement de l'essence, en raison de la structure de l'injecteur. Dans ce cas, un revêtement de céramique est déposé sur la face externe du nez d'injecteur au moins autour et immédiatement en aval du ou des orifices de sortie.

## Revendications

1. Injecteur d'essence, pour moteur à combustion interne à injection directe, du type dans lequel l'injecteur comprend un nez (5) percé d'au moins un orifice (7) de sortie d'essence vers une chambre de combustion du moteur, lorsque ledit orifice de sortie (7) est alimenté en essence, en position d'ouverture de l'injecteur, dans laquelle un obturateur mobile (9) est écarté d'un siège (8) par des moyens d'actionnement, à l'encontre de moyens de rappel (11) rappelant l'obturateur (9) vers son siège (8), et le maintenant contre ledit siège (8) en position de fermeture de l'injecteur, **caractérisé en ce que** la face externe (6b) du nez (5) présente, immédiatement en aval et autour dudit orifice de sortie (7), par rapport au sens de passage de l'essence, au moins un décrochement (12) délimitant un évidement dans la face externe (6b) du nez (5), et **en ce qu'**un revêtement de céramique (14) est déposé au moins dans ledit évidement.

2. Injecteur de carburant selon la revendication 1, **caractérisé en ce que** ledit revêtement de céramique (14) remplit au moins ledit évidement de sorte à assurer sensiblement une continuité de surface entre la paroi dudit orifice de sortie (7) et la face externe (15) dudit revêtement de céramique (14), et, de préférence également, entre la face externe (15) du revêtement de céramique (14) et la face externe (6b) du nez (5) en aval dudit orifice de sortie (7).

3. Injecteur de carburant selon l'une quelconque des revendications 1 et 2, **caractérisé en ce qu'**il comporte un téton de déviation (16), fixé à l'obturateur (9) et axialement engagé dans ledit orifice de sortie (7), sans contact avec la paroi dudit orifice (7), et en saillie vers l'aval dudit orifice (7), le revêtement de céramique (14) entourant sans contact au moins une partie dudit téton de déviation (16).

4. Injecteur de carburant selon la revendication 3, **caractérisé en ce que** ledit téton de déviation (16) est au moins partiellement recouvert d'un revêtement de céramique (19).

5. Injecteur de carburant selon l'une quelconque des revendications 1 à 4, **caractérisé en ce que** la face externe (6b) du nez (5) de l'injecteur présente une nervure périphérique (18), en saillie vers l'aval et entourant à distance ledit orifice de sortie (7), et le revêtement de céramique (14) s'étend dudit orifice de sortie (7) au moins jusqu'au pied de ladite nervure (18).

6. Injecteur de carburant selon l'une quelconque des revendications 1 à 5, **caractérisé en ce que** la céramique dudit revêtement (14, 19) est une céramique vitreuse.

7. Injecteur de carburant selon l'une quelconque des revendications 1 à 6, **caractérisé en ce que** le revêtement de céramique (14, 19) est constitué d'un dépôt par projection de céramique sur le nez (5) métallique de l'injecteur.

8. Injecteur de carburant selon l'une quelconque des revendications 1 à 6, **caractérisé en ce que** le revêtement de céramique (14, 19) est constitué par un dépôt électrolytique de céramique sur le nez (5) métallique de l'injecteur.

## Patentansprüche

1. Brennstoffeinspritzdüse für einen Verbrennungsmotor mit Direkteinspritzung der Bauart, in welcher die Einspritzdüse eine Nase (5) aufweist, die von wenigstens einer Öffnung (7) für einen Brennstoffaustritt in Richtung einer Verbrennungskammer des Motors, wenn die Austrittsöffnung (7) in Öffnungsstellung der Einspritzdüse mit Brennstoff versorgt wird, durchbrochen ist, in welcher ein bewegliches Verschlußelement (9) durch ein Betätigungsmittel in Abstand zu einem Sitz (8) gehalten wird, gegen ein Rückstellmittel (11), welches das Verschlußelement (9) in Richtung seines Sitzes (8) zurückstellt und dieses in Schließstellung der Einspritzdüse an dem Sitz (8) hält, **dadurch gekennzeichnet, daß** die Außenfläche (6b) der Nase (5) in bezug zur Durchgangsrichtung des Brennstoffs unmittelbar stromabwärts und um die Austrittsöffnung (7) herum wenigstens einen Absatz (12) aufweist, der eine Aussparung in der Außenfläche (6b) der Nase (5) begrenzt, und daß eine Keramikauflage (14) wenigstens in der Aussparung angeordnet ist.

2. Brennstoffeinspritzdüse nach Anspruch 1, **dadurch gekennzeichnet, daß** die Keramikauflage (14) die Aussparung derart füllt, daß diese im wesentlichen eine Kontinuität der Oberfläche zwischen der Wand der Austrittsöffnung (7) und der Außenfläche (15) der Keramikauflage (14) und vorzugsweise auch zwischen der Außenfläche (15) der Keramikauflage (14) und der Außenfläche (6b) der Nase (5) stromabwärts der Austrittsöffnung (7) sicherstellt.

3. Brennstoffeinspritzdüse nach einem der Ansprüche 1 und 2, **dadurch gekennzeichnet, daß** diese einen Ablenkansatz (16) aufweist, der an dem Verschlußelement (9) befestigt ist und achsial in die Austrittsöffnung (7) ohne Berührung mit der Wand der Öffnung (7) und in Richtung stromabwärts der Öffnung (7) vorspringend eingreift, wobei die Keramikauflage (14) wenigstens einen Abschnitt des Ablenkansatzes (16) berührungslos umgibt.

4. Brennstoffeinspritzdüse nach Anspruch 3, **dadurch gekennzeichnet, daß** der Ablenkansatz (16) wenigstens teilweise von einer Keramikauflage (19) überdeckt ist.

5. Brennstoffeinspritzdüse nach einem der Ansprüche 1 bis 4, **dadurch gekennzeichnet, daß** die Außenfläche (6b) der Nase (5) der Einspritzdüse eine Umfangsrippe (18)aufweist, die sich in Stromabwärtsrichtung erstreckt und die Austrittsöffnung (7) in Abstand umgibt, und sich die Keramikauflage (14) der Austrittsöffnung (7) wenigstens bis zum Fuß der Rippe (18) erstreckt.

6. Brennstoffeinspritzdüse nach einem der Ansprüche 1 bis 5, **dadurch gekennzeichnet, daß** die Keramik der Auflage (14, 19) eine Glaskeramik ist.

7. Brennstoffeinspritzdüse nach einem der Ansprüche 1 bis 6, **dadurch gekennzeichnet, daß** die Keramikauflage (14, 19) aus einer Ablagerung durch Keramikprojektionen auf die metallische Nase (5) der Einspritzdüse gebildet ist.

8. Brennstoffeinspritzdüsen nach einem der Ansprüche 1 bis 6, **dadurch gekennzeichnet, daß** die Keramikauflage (14, 19) durch eine elektrolytische Keramikablagerung auf der metallischen Nase (5) der Einspritzdüse gebildet ist.

## Claims

1. A fuel injector for a direct-injection internal combustion engine of the type in which the injector has a tip (5) having at least one outlet orifice (7) from which gasoline enters an engine combustion chamber when the injector is in an open position and gasoline is delivered to the outlet orifice (7), a movable throttle (9) being moved back from a seat (8) by actuating means against return means (11), which return the throttle (9) to its seat (8) and retain it against said seat (8) when the injector is in a closed position, **characterised in that**, immediately downstream of and around said outlet orifice (7) relative to the direction in which the gasoline is delivered, the external face (6b) of the tip (5) has at least one kink (12) bounding a recess in the external face (6b) of the tip (5) and **in that** a coating of ceramic (14) is deposited at least in said recess.

2. A fuel injector according to claim 1, **characterised in that** said ceramic coating (14) at least fills said recess, substantially in order to provide surface continuity between the wall of said outlet orifice (7) and the external face (15) of said ceramic coating (14) and, preferably also between the external face (15) of the ceramic coating (14) and the external face (6b) of the tip (5) downstream of said outlet orifice (7).

3. A fuel injector according to any one of claims 1 and 2, **characterised in that** it has a deflection pintle (16), attached to the throttle (9) and axially engaged in said outlet orifice (7), without being in contact with the wall of said orifice (7), and projecting out in a downstream direction from said orifice (7), the ceramic coating (14) surrounding at least a part of said pintle (16) without being in contact therewith.

4. A fuel injector according to claim 3, **characterised in that** said pintle (16) is at least partially coated with a ceramic coating (19).

5. A fuel injector according to any one of claims 1 to 4, **characterised in that** the external face (6b) of the tip (5) of the injector has a peripheral ridge (18) projecting downstream and surrounding said outlet orifice (7) at a distance therefrom, and the ceramic coating (14) extends from said outlet orifice (7) at least as far as the base of said ridge (18).

6. A fuel injector according to any one of claims 1 to 5, **characterised in that** the ceramic of said coating (14, 19) is a vitreous ceramic.

7. A fuel injector according to any one of claims 1 to 7, **characterised in that** the ceramic coating (14, 19) is formed by a process of ceramic deposition by spraying on the metal tip (5) of the injector.

8. A fuel injector according to any one of claims 1 to 6, **characterised in that** the ceramic coating (14, 19) is formed by electrolytic ceramic deposition on the metal tip (5) of the injector.
